(19) Europäisches Patentamt

European Patent Office

Office européen des brevets

(11) Veröffentlichungsnummer: **0 197 316 B1**

## (12) EUROPÄISCHE PATENTSCHRIFT

(45) Veröffentlichungstag der Patentschrift: **01.04.92**

(21) Anmeldenummer: **86103081.5**

(22) Anmeldetag: **07.03.86**

Die Akte enthält technische Angaben, die nach dem Eingang der Anmeldung eingereicht wurden und die nicht in dieser Patentschrift enthalten sind.

(51) Int. Cl.⁵: **B60G 17/08**, F16F 9/10

(54) **Vorrichtung zur Dämpfung von Bewegungsabläufen.**

(30) Priorität: **12.04.85 DE 3513128**
**12.07.85 DE 3524862**

(43) Veröffentlichungstag der Anmeldung:
**15.10.86 Patentblatt 86/42**

(45) Bekanntmachung des Hinweises auf die Patenterteilung:
**01.04.92 Patentblatt 92/14**

(84) Benannte Vertragsstaaten:
**DE FR GB IT SE**

(56) Entgegenhaltungen:
**GB-A- 1 450 765**
**GB-A- 2 113 869**
**US-A- 3 807 678**
**US-A- 3 861 696**
**US-A- 4 491 207**

(73) Patentinhaber: **ROBERT BOSCH GMBH**
**Postfach 30 02 20**
**W-7000 Stuttgart 30(DE)**

(72) Erfinder: **Karnopp, Dean, Prof. Ing.**
**1217 Stanford Place**
**Davis, CA 95616(US)**

EP 0 197 316 B1

Rank Xerox (UK) Business Services

**Beschreibung**

Stand der Technik

Die Erfindung betrifft eine Vorrichtung zur Dämpfung von Bewegungsabläufen nach dem Oberbegriff des Anspruchs 1.

Bei einer bekannten Vorrichtung dieser Art (US-A 3 807 678) ist bei einem Aufhängesystem zweier Massen, wobei es sich bei der einen Masse um ein oder mehrere Räder eines Fahrzeugs und bei der anderen Masse um den Fahrzeugaufbau handeln kann, zwischen beiden eine passive normale Druckfeder angeordnet, die als passives Trennglied bezeichnet ist und der ein sogenannter aktiver Dämpfer parallelgeschaltet ist. Für aktiv wird dieser Dämpfer, bei welchem in einem Zylinder ein diesen in zwei Arbeitskammern unterteilender Kolben gleitet, deshalb gehalten, weil in die Dämpfungseigenschaften, also in die Voluminaverdrängungen des Druckmittels in den jeweiligen Arbeitshälften des Dämpfers durch Steuerung sozusagen aktiv eingegriffen wird. Zu diesem Zweck sind die beiden Arbeitskammern jeweils zueinander überkreuz miteinander durch Dämpferventile verbunden, wobei die von diesen Ventilen jeweils durchgelassene Druckmittelmenge noch "aktiv" durch entsprechende Ansteuerung der Ventile mittels geeignet aufbereiteter Sensorsignale bestimmt wird. Da bei diesem bekannten Federungssystem die Feder selbst völlig passiv, der Dämpfer in seinen Eigenschaften als aktiv aufgefaßt worden ist, wird in dieser Veröffentlichung das Gesamtsystem als halbaktiv oder semiaktiv bezeichnet. Diese Bezeichnung steht aber nicht in einer sinnvollen Beziehung zu den die vorliegende Erfindung betreffenden Dämpfern, die ohne Bezugnahme auf nicht berücksichtigte Federsysteme selbst als sogenannte semiaktive Dämpfer bezeichnet sind, aus Gründen, auf die weiter unten noch eingegangen wird.

Dabei sind ferner die beiden Anschlüsse der von dem vorhandenen Kolben/Zylinderaggregat gebildeten Arbeitskammern unmittelbar über Rückschlagventile mit einem Speicher verbunden, in welchen auch der Auslaß eines der beiden Dämpferventile, nämlich das mit der kolbenstangenfreien Arbeitskammer verbundenen Dämpferventils einmündet, während das andere Dämpferventil mit seinem Auslaß nur über das soeben erwähnte erste Dämpferventil eine Verbindung zum Speicher aufweist.

Eine weitere, aber unbedingt für die Durchführung der Grundfunktion bei dieser bekannten Vorrichtung notwendige Eigenschaft der beiden mit den zugeordneten Arbeitskammern des Kolben/Zylinderaggregats verbundenen Dämpferventile besteht darin, daß diese ausdrücklich nur in einer Richtung den Fluß des Druckmittels zulassen, und zwar in der Richtung von dem jeweiligen Arbeitskammeranschluß zum Anschluß der anderen Arbeitskammer. Der Rückfluß des Druckmittels kann ausschließlich über die ungesteuerten, zusätzlich vorhandenen Rückschlagventile erfolgen.

Die insofern als aktiv empfundene Steuerung der beiden Dämpferventile erfolgt dadurch, daß deren Sperrwiderstand in der jeweiligen Einwegrichtung, also stets nur aus der jeweiligen Arbeitskammer heraus, kontinuierlich durch elektrische Ansteuerung von Drosselnmitteln verändert werden kann. Dabei sind die Dämpferventile in ihrer Ansteuerung ferner so ausgelegt, daß dann, wenn die absolute Geschwindigkeit der gefederten und gedämpften Masse entgegengesetzt zur relativen Bewegung von Masse und ihrer Lagerung verläuft, durch die Dämpfereinstellung eine im wesentlichen widerstandsfreie Dämpfungskraft (Dämpfungskraft Null) erzeugt wird.

Da zu einem gegebenen Zeitpunkt der Kolben des das Dämpfungssystem bildenden Kolben/Zylinderaggregats sich immer nur in einer der beiden möglichen Richtungen bewegen kann, kann grundsätzlich auch nur immer eines der beiden vorhandenen Dämpferventile ansprechen, da das jeweils andere Dämpferventil wegen seines Einwegcharakters vollständig gesperrt sein muß. Folglich ist es bei dieser bekannten Dämpfungsvorrichtung auch nicht möglich, ein sogenanntes asymmetrisches Dämpfungsverhalten zu erzeugen und dem Dämpfungssystem aufzuprägen, welches eines der Hauptgesichtspunkte der vorliegenden Erfindung ist.

Bei einem weiteren Kraftfahrzeug-Dämpfungssystem ist es ferner bekannt (US-A-4 491 207), die Dämpfungskraft durch entsprechende Ansteuerung eines geeigneten Ventils bei bestimmten dynamischen Fahrzuständen im wesentlichen auf Null zu reduzieren, und zwar durch Anordnung von Sensoren, die auf momentane dynamische Fahrbedingungen der Fahrzeugkomponenten reagieren. Es ist ein Regler und ein einziges Dämpferventil vorgesehen, welches mit einer der beiden Arbeitskammern eines Kolben/Zylinderaggregats verbunden ist und welches so angesteuert wird, daß dieses Ventil entweder voll geöffnet oder voll geschlossen ist. Dem Ventil ist ferner vorgeschaltet ein manuell einstellbares Drosselventil. Diesen beiden Ventilen sind dann noch Sicherheitsventile parallelgeschaltet. Die andere Kammer des Kolben/Zylinderaggregats ist mit einem Speicher lediglich über ein Rückschlagventil verbunden.

Die Wirkung eines solchen Dämpfersystems läßt sich dieser Veröffentlichung dahingehend entnehmen, daß die volle Schließstellung des Dämpfer- oder Steuerventils normalerweise stets eingehalten wird, mit Ausnahme solcher Perioden, bei denen Kraftfahrzeugrahmen und Achse sich in der gleichen Richtung, also entweder nach oben oder nach unten, bewegen und die absolute Geschwindigkeit des Fahrzeugrahmens geringer als die absolute Geschwindigkeit der Achse ist. Zu diesen Zeiträumen ist das Dämpferventil dann auf maximalen Durchfluß umgeschaltet. Es wird angenommen, daß sich hierdurch ein günstiger Einfluß auf das Gesamtverhalten des Dämpfersystems ergibt, da in einem solchen Fall eine übliche, unkontrollierte Dämpferwirkung die Fahrzeugrahmenbewegung eher verstärkt als mindert.

Erwähnt ist bei dieser Veröffentlichung allerdings nicht, wie sich die Radbewegung verhält, die mindestens in die Betrachtungen mit einbezogen werden muß, denn vor allen Dingen kommt es bei Dämpfungssystemen auch darauf an, die Relativgeschwindigkeit beider Körper, also bei einer Fahrzeugaufhängung des Rades und der Fahrzeugmasse, in die Gewinnung von Signalen einzubeziehen.Hierauf wird nicht eingegangen; das Dämpferventil schaltet lediglich zwischen zwei Extremwerten (vollgeöffnet oder vollgeschlossen) um, wobei auch bei vollgeöffneter Position noch eine geringe Dämpferkraft verbleiben soll, um ein völlig ungedämpftes Springen des Rades zu verhindern.

Bei einem weiteren bekannten Dämpfungssystem (GB-A-1 450 765) wird lediglich auf die Verwertung von absoluten Geschwindigkeitsangaben abgestellt, d.h. im Regelgesetz treten passive Komponenten nicht auf.

Ferner ist es bekannt (US-A 3 861 696) Kippbewegungen eines Fahrzeugs um die Mittelachse dadurch zu dämpfen, daß jeweils mit beiden Arbeitskammern vorgesehener Kolben/Zylinderaggregate 2/2-Wege-Umschaltventile verbunden sind, die in entsprechender Abfolge gesteuert und von einer zentralen Einheit, die auf eingehende Kippsignale reagiert, schlagartig von ihrer Durchlaßstellung in die Sperrstellung bzw. umgekehrt umgeschaltet werden.

Zur umfassenden Darstellung wird ferner noch auf solche Aufhängungen bei Fahrzeugen hingewiesen, bei denen effektiv aktive Dämpfermittel vorgesehen sind (Aufsatz "Active Damping in Road Vehicle Suspension Systems", veröffentlicht in der Zeitschrift "Vehicle System Dynamics, 12 (1983), Seiten 291 - 316). Diese Veröffentlichung ist deshalb genannt, weil in dieser grundlegende Überlegungen auch in theoretisch ausführlicher Form insbesondere für die Schaffung aktiver Dämpfungseigenschaften bei Kraftfahrzeuaufhängungen angegeben sind.

Der Erfindung liegt die Aufgabe zugrunde bei einem Dämpfersystem einerseits den Aufbau drastisch zu vereinfachen, andererseits aber dieses Dämpfersystem so auszubilden, daß, obwohl, wie für bestimmte Bedingungen eigentlich erforderlich, aktive Energie nicht zugeführt wird, dennoch ein Verhalten erzielt werden kann, welches die Eigenschaften passiver Dämpfungssysteme und gleichzeitig aktiver Dämpfungssysteme im wesentlichen integriert und daher optimale Funktionsfähigkeit unter allen Bedingungen sichergestellt ist.

Vorteile der Erfindung

Diese Erfindung wird gelöst durch die kennzeichnenden Merkmale des Hauptanspruchs, wobei sich der Vorteil ergibt, daß einmal die Dämpfungskräfte variabel einstellbar sind, außerdem aber auch in gewünschter Weise so asymmetrisch bemessen werden können, daß sich die erfindungsgemäße Dämpfungskonzeption wie ein aktiver Dämpfer oder jedenfalls stark angenähert wie ein aktiver Dämpfer verhält. Es werden keine Dämpfungskräfte mit einem vorgegebenen Vorzeichen erzeugt dann, wenn aufgrund der jeweiligen Betriebsbedingungen und erfaßten Sensorsignale gerade eine aktive Dämpferkraft mit entgegengesetzten Vorzeichen erforderlich wäre. Das erfindungsgemäße Dämpfungssystem ist so ausgelegt, daß sich in diesem Falle die Dämpferkraft Null oder nahezu Null ergibt.

Die von außen erforderliche Energiezufuhr bezieht sich ausschließlich auf die geringen Steuerenergien, die erforderlich sind, um beispielsweise Ventilpositionen vorzugeben.

Zeichnung

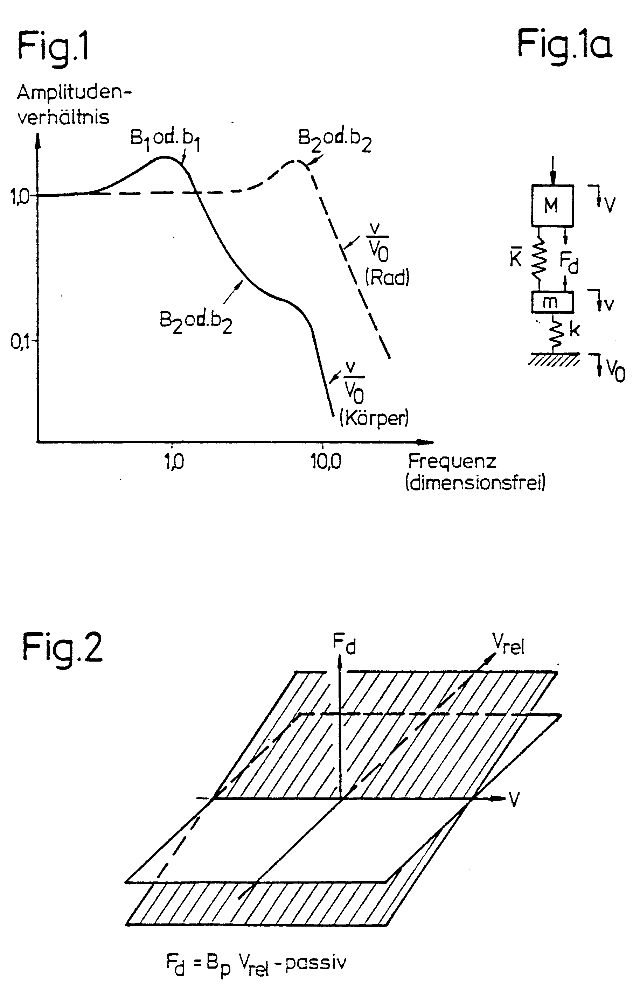

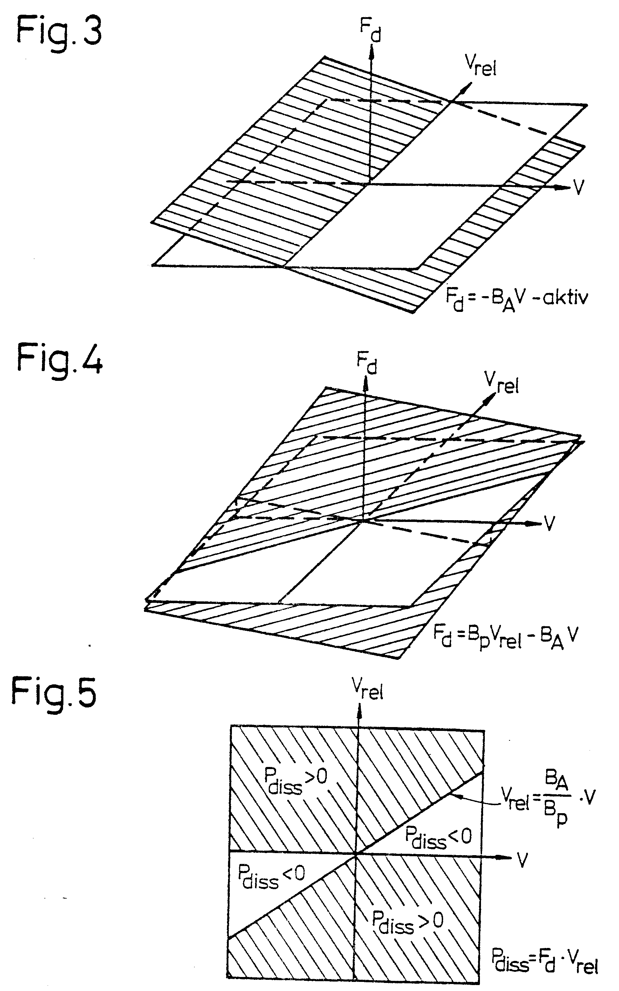

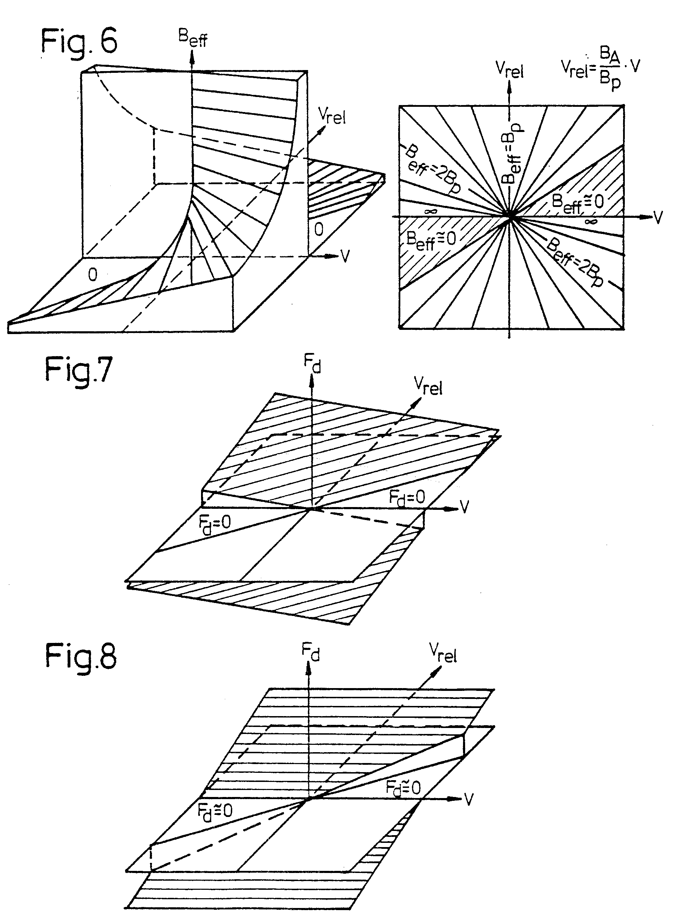

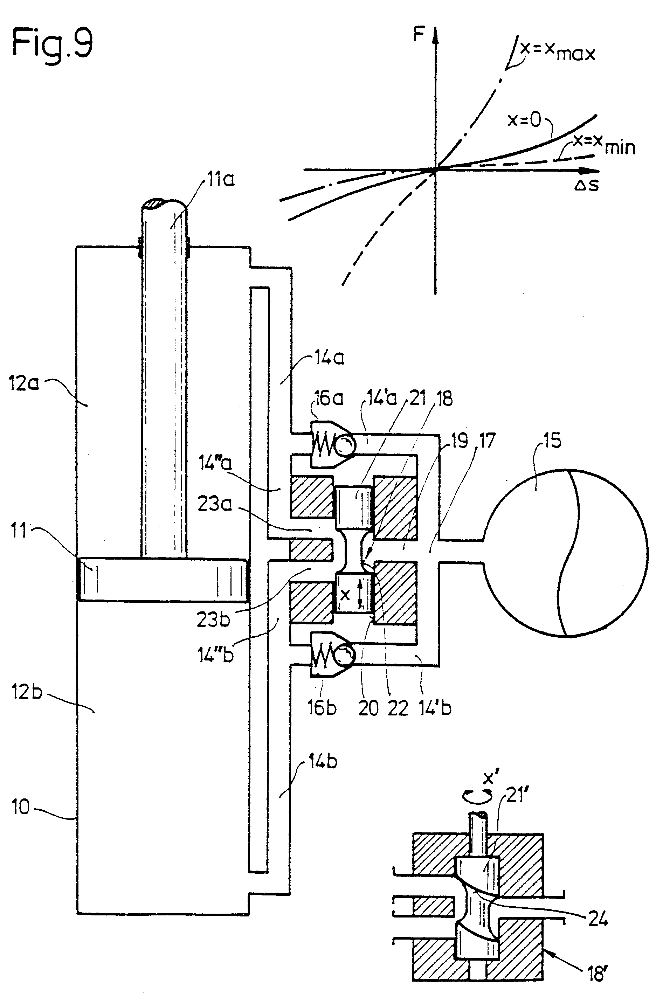

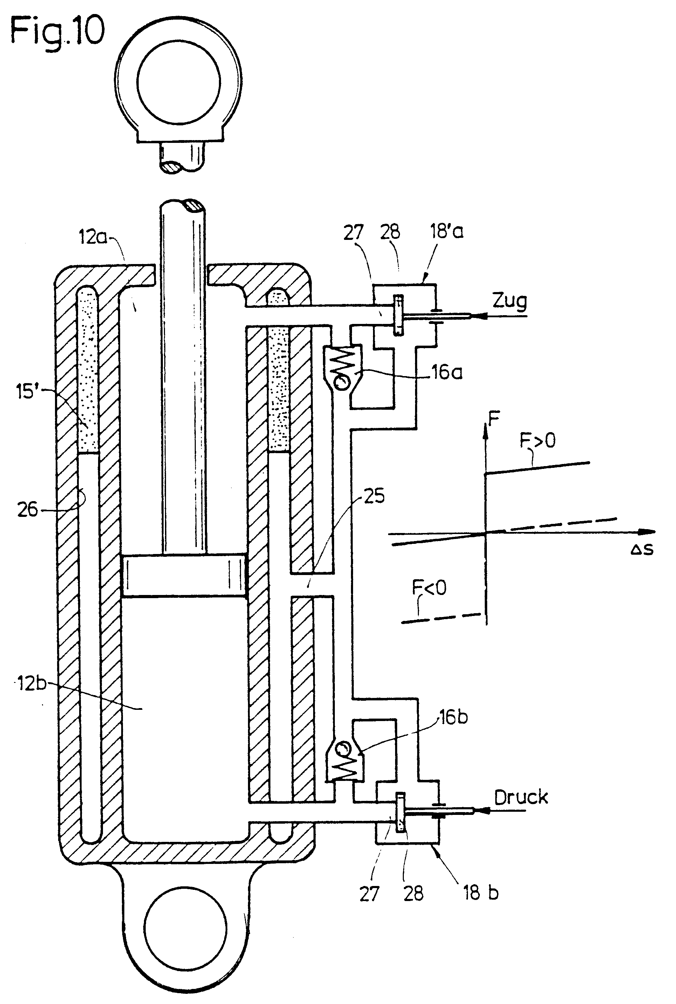

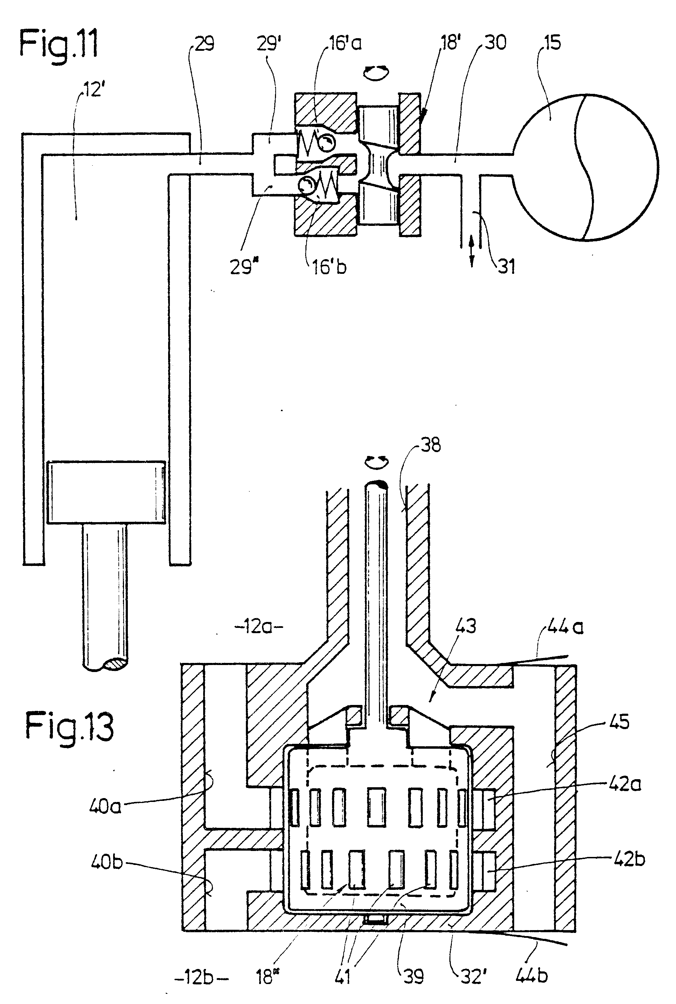

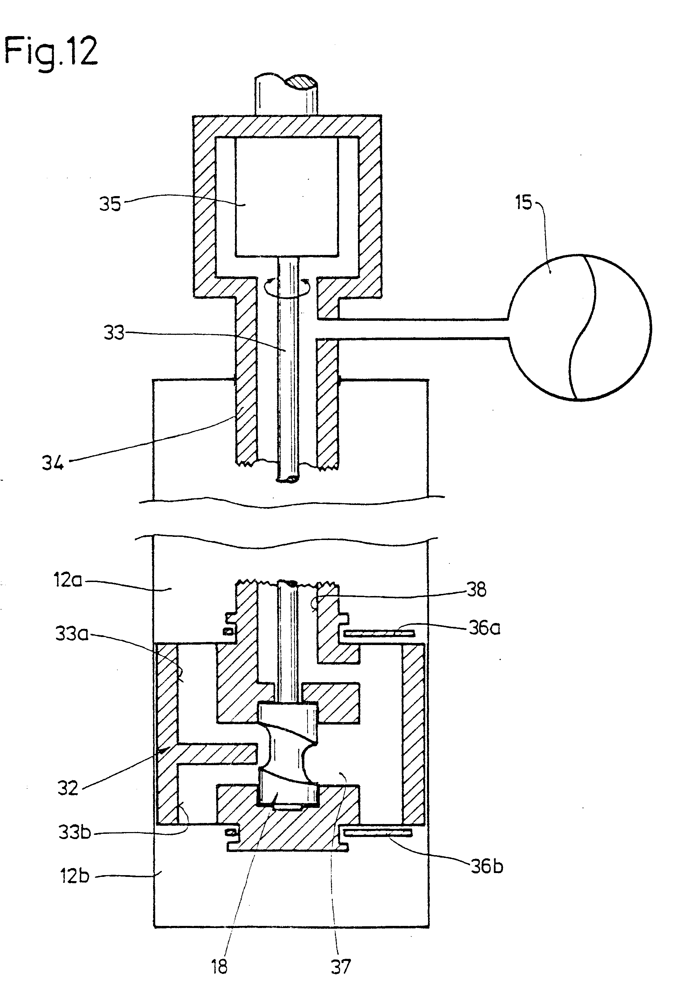

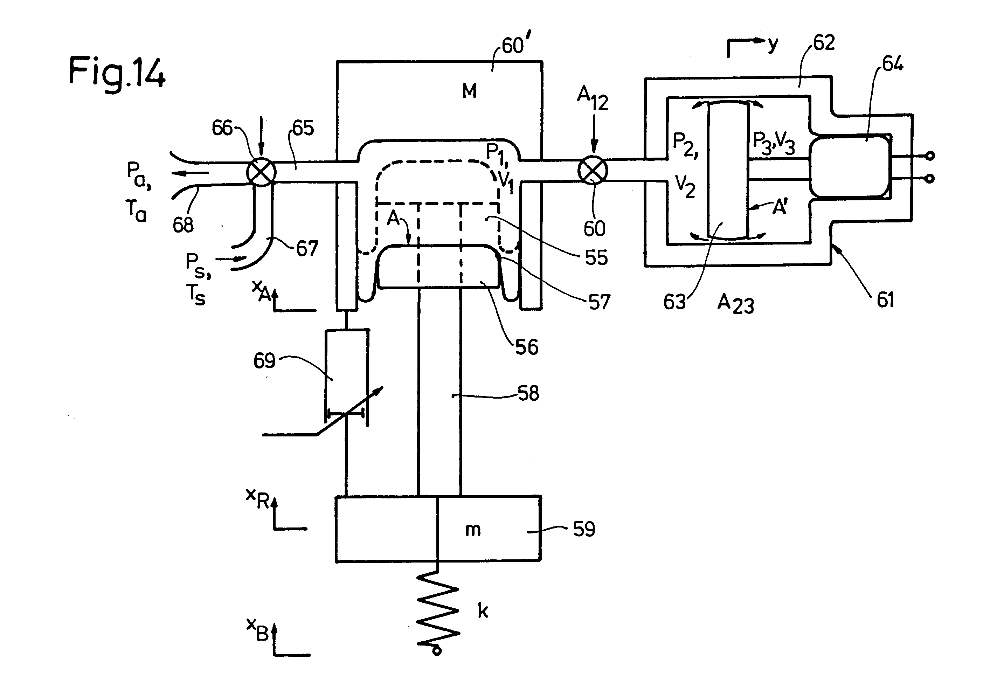

Ein Ausführungsbeispiel der Erfindung ist in der Zeichnung dargestellt und wird in der nachfolgenden Beschreibung näher erläutert. Es zeigen: Fig. 1 in Form eines Diagramms den Verlauf von Dämpfungsamplituden verhältnissen von Hauptkörper und Rad über der Frequenz der einwirkenden Kräfte, Fig. 2 in Form eines Diagramms die Dämpfungskraft in der sogenannten V-Vrel-Ebene für den passiven Dämpfungsfall, wobei Vrel die Relativgeschwindigkeit der miteinander über den Dämpfer verbundenen Massen und V die Aufbaugeschwindigkeit, angewendet auf ein Fahrzeug, darstellt, Fig. 3 ein gleiches Diagramm wie das der Fig. 2, lediglich für den rein aktiven Dämpfungsfall, Fig. 4 ein der Darstellung der Figuren 2 und 3 entsprechendes Dämpfungskraftdiagramm in der V-Vrel-Ebene für den kombinierten aktiven und passiven Dämpfungsfall, Fig. 5 eine Darstellung von Bereichen in der V-Vrel-Ebene, wo Energie im Fall einer Dämpfung zugeführt und wo Energie vernichtet wird, Fig. 6 den Verlauf eines durch Sensorsignalansteuerung modulierten, effektiven Dämpfungskoeffizienten bei einem semiaktiven Dämfer in der V-Vrel-Ebene einmal in einer perspektivischen, dem Verständnis dienenden Darstellung und einmal in Draufsicht des Diagramms, Fig. 7 die von einem in seiner Dämpfungskraft gesteuerten semiaktiven Dämpfer aufgebrachte Dämpfungskraft in der V-Vrel-Ebene und Fig. 8 das gleiche Diagramm der Fig. 7 dann, wenn ein passiver Dämpfer lediglich ein- oder ausgeschaltet wird, Fig. 9 ein erstes praktisches Ausführungsbeispiel eines semiaktiven Dämpfers mit variablem, asymmetrischem Dämpfungsverhalten in einer schematischen Schnittdarstellung, zusammen mit einem Diagramm, welches den Verlauf der aufgebrachten Dämpfungskraft über der Geschwindigkeit angibt und einem weiteren Zusatzbild einer alternativen Ausgestaltung des Dämpferventils, Fig. 10 ein anderes Ausführungsbeispiel eines semiaktiven Dämpfers mit direkter Dämpfungskraftsteuerung durch Tellerventile, ebenfalls begleitet von einem den Verlauf der Dämpfungskraft über der Geschwindigkeit angebenden Diagramm, Fig. 11 ein weiteres Ausführungsbeispiel eines semiaktiven Dämpfers mit nur einer Zylinderarbeitskammer, Fig. 12 ein Ausführungsbeispiel eines semiaktiven Dämpfers, bei dem die variabel asymmetrischen Ventilmechanismen im Kolben untergebracht sind, Fig. 13 eine Variante der Anordnung der Ventilmechanismen im Kolben, ebenfalls im Schnitt, und Fig. 14 die Zuordnungsmöglichkeit der semiaktiven Dämpferkonzeptionen zu einem möglichen, Gesamtaufhängungskonzept mit Luftfederung darstellt.

Beschreibung der Ausführungsbeispiele

Die folgenden Ausführungen gehen zunächst bis in einiges Detail auf theoretische Zusammenhänge ein, die sich bei der allgemeinen Betrachtung von in Aufhängungssystemen auftretenden Dämpfungskräften ergeben. Zugrundegelegt ist in diesem Zusammenhang das Zwei-Massen-Modell, wie es in Fig. 1a dargestellt ist.

Die theoretischen Überlegungen, die zu den erfindungsgemäßen, weiter unten anhand der Figuren 9 bis 15 dargestellten Realisierungsmöglichkeiten der Erfindung führen, werden im folgenden durch die Diagrammdarstellungen der Fig. 1 bis 8 genauer erläutert; sie dienen zum besseren Verständnis der Erfindung und klären genauer den speziellen erfindungsgemäßen Standort ab, den die sog. halbaktiven oder semiaktiven Dämpfungsmittel nach vorliegender Erfindung einnehmen.

Bei dem in Fig. 1a dargestellten Zwei-Massen-Modell ist V die sog. Körpergeschwindigkeit, hier im speziellen Anwendungsfall beispielsweise also des Kraftfahrzeugsaufbaus,v ist die Radgeschwindigkeit und $v_o$ die Straßen-Eingangsgeschwindigkeit. Als Funktion der relativen Geschwindigkeit Vrel = v-V würde ein passiver Dämpfer eine Dämpfungskraft Fd erzeugen. Im linearisierten Fall läßt sich ein passiver Dämpfungskoeffizient definieren in folgender Gleichung:

$$Fd = B_P(v-V) = B_P Vrel; \quad B_P > o . \quad (1)$$

Diese Formel läßt sich durch den folgenden Ausdruck generalisieren

$$Fd = -B1V + B2^\bullet v , \quad (2)$$

wobei dann, wenn B1 = B2 = $B_P$ ist, wieder der passive Fall vorliegt. Unterscheidet sich jedoch B1 von B2 (B1 ≠B2), dann ist der Dämpfer mindestens teilweise aktiv in dem Sinne, daß zeitweise dem System Energie zugeführt wird.

Trennt man jetzt die Dämpfungskraft in zwei Terme auf, die insoweit einen aktiven und einen passiven Dämpfungskraftanteil betreffen, ergibt sich die folgende Formel

$$Fd = -B_A V + B_P(v-V) ,$$
$$= -B_A V + B_P Vrel . \quad (3)$$

Bei diesem Ausdruck (3) stellt $B_A$ den aktiven Dämpfungskoeffizienten und $B_P$ den passiven Dämpfungskoeffizienten dar. Damit ist

$$B1 = B_A + B_P , \quad (4)$$

$B2 = B_P$ .    (5)

In diesem Zusammenhang wird zur noch genaueren Einführung und theoretischen Erläuterung von sich bei Kraftfahrzeugen ergebenden Dämpfungsproblemen auf die schon erwähnte Veröffentlichung verwiesen, die hier unterstützend angeführt wird, nämlich auf den Aufsatz von D. Karnopp "Active Damping in Road Vehicle Suspension Systems", veröffentlicht in der Zeitschrift Vehicle System Dynamics, 12, 1983, Seiten 291-316. In dieser Veröffentlichung sind die folgenden Dämpfungsverhältnisse angegeben und definiert (s. Seite 284, also:

$$\xi 1 = \frac{B1}{2\sqrt{M\overline{K}}} = \frac{B_A + B_P}{2\sqrt{M\overline{K}}} \quad , \qquad (6)$$

$$\xi 2 = \frac{B2}{2\sqrt{mk}} = \frac{B_P}{2\sqrt{mk}} \quad . \qquad (7)$$

Bei diesen Ausdrücken stellen m und M die jeweiligen Rad- und Körpermassen und k und $\overline{K}$ die Federkonstanten des Reifens bzw. der Hauptaufhängung dar. Es wird in diesem Zusammenhang auf die in Fig. 1 dargestellten Kurvenverläufe verwiesen, die die Amplitudenverhältnisse (Amplitude Ratio f) über der nichtdimensionalen Frequenz angeben. Man erkennt aus Fig. 1, daß die Rad- und Körper-Resonanzfrequenzen hinreichend gut getrennt sind, wobei $\xi 1$ und $\xi 2$ annähernd die beiden Resonanzspitzen in den Kurvenverläufen bestimmen.

In dem soeben genannten Aufsatz ist ausgeführt, daß die Notwendigkeit, die Radresonanz durch B2 oder $\xi 2$ zu kontrollieren, zu der Lösung führt, den Körper im Frequenzbereich zwischen der Körperresonanz und der Radresonanz zu isolieren. In idealer Weise fällt die Reaktion des Körpers auf Komponenten von Straßeneingangseinflüssen bei Frequenzen oberhalb der Körperresonanzfrequenz mit der Frequenz schnell ab. Dies bedeutet, daß die Aufhängung Störungen oberhalb von 1 oder 2 Hz ausfiltern kann. Die Radresonanz kann reduziert werden durch Vergrößerung von B2, was dazu beiträgt, das Rad in engen Kontakt mit der Straßenoberfläche zu halten; allerdings verschlechtert sich die Körperisolation oder -aufhängung bei einer Vergrößerung von B2.

Ist im passiven Fall $B1 = B2 = B_P$, dann kann man sowohl die Körper- als auch die Radresonanz durch Vergrößern von $B_P$ reduzieren; dies reduziert aber auch die Körperisolation und führt zu einer härteren Aufhängung oder Federung. In diesem Fall beträgt das Verhältnis von $\xi 1$ zu $\xi 2$

$$\frac{\xi 1}{\xi 2}\bigg|_{\text{passiv}} = \frac{\sqrt{mk}}{\sqrt{M\overline{K}}} = n \cdot e \quad . \qquad (8)$$

Hierbei ist e das Massenverhältnis m/M und n ist das Verhältnis der ungedämpften und ungekoppelten natürlichen Frequenzen, also

$$n = \omega 2 / \omega 1 = \sqrt{k/m} \bigg/ \sqrt{\overline{K}/M} .$$

Wenn $B2 = B_P$ gerade hinreichend groß gemacht ist, um die Radresonanz zu kontrollieren, dann kann man B1 vergrößern, indem man eine aktive Körpergeschwindigkeits-Rückkopplung verwendet, also $B_A > o$. Dies ermöglicht eine Vergrößerung von $\xi 1$ (oder eine Verringerung der Körperresonanz) ohne Verlust an Körperisolation bei Frequenzen oberhalb der Körperresonanzfrequenz. Besonders günstig ist dies für $\xi 1 < \xi 2$, im passiven Fall also, bei dem:

$n \cdot e < 1$    (9)

ist.

Es sei nun die durch die Erfindung eröffnete Möglichkeit betrachtet, das aktive Dämpfungsgesetz der Gleichung 3 dadurch angenähert zu realisieren, daß man einen sog. halbaktiven oder semiaktiven Dämpfer verwendet, d.h. einen Dämpfer, der über ein variables Verhältnis von Kraft zu Geschwindigkeit verfügt. Hierbei ist natürlich zu vermerken, daß aktive Dämpfer in der Lage sind, auch eine Anzahl anderer, zugeordneter Geschwindigkeiten zu berücksichtigen, beispielsweise herrührend aus Roll- und Neigungsbewegungen des Fahrzeugs. Das in Fig. 1a dargestellte einfache Zwei-Massen-Modell beschreibt die weiteren Freiheitsgrade eines tatsächlichen Fahrzeugs nicht - andererseits sind genauere Erläuterungen zum hinreichenden Verständnis der Erfindung aber nicht erforderlich.

Auf jeden Fall ergibt sich bei einem semiaktiven Dämpfer zwar einerseits die Einschränkung bezüglich der Dämpfungskrafterzeugung dahingehend, daß ein solcher Dämpfer zwar Kraft bzw. Energie vernichten oder aufnehmen, jedoch nicht erzeugen bzw. zuführen kann, andererseits ergeben sich hierdurch aber eine Vielzahl von Vorteilen, die darin bestehen, daß eine in ihren vielfachen Ausführungsformen weiter unten noch zu besprechende semiaktive Dämpfungseinheit mit variabler Dämpfungskraft keine Energiezufuhr, mit Ausnahme für ein vorhandenes Steuerventil benötigt und auch bei Ausfall von Sensor- oder Steuereinheiten keinesfalls unstabil werden kann, wie dies bei vollaktiven Systemen nicht auszuschließen ist.

Die folgenden Ausführungen betreffen die Dämpfungskraft-Gesetzmäßigkeiten in der V-Vrel-Ebene, wobei die Fig. 2 zunächst die von einem linearen passiven Dämpfer erzeugte Dämpfungskraft angibt, mit $B_P > o$, $B_A = o$. Dabei werden die Variablen V und Vrel als äquivalente Angabe zu den Größen V und v hauptsächlich aus Vereinfachungsgründen verwendet, denn die Größen V und Vrel sind in der Praxis jedenfalls einfacher zu messen als V und v.

Im Gegensatz hierzu zeigt die Darstellung der Fig. 3 die Dämpfungskraft Fd in der V-Vrel-Ebene für den rein aktiven Fall, also mit $B_A > o$, $B_P = o$. In dem weiter vorn schon erwähnten Aufsatz ist im einzelnen erläutert, daß dies ein wenig realistischer Fall ist, da sich hierbei die Radresonanzen für typische Straßen-Kraftfahrzeugparameter nur wenig kontrollieren lassen.

In der Darstellung der Fig. 4 ist nun der allgemeine Fall einer kombinierten aktiven und passiven Dämpfung angegeben, mit $B_A > o$, $B_P > o$. Dieses Diagramm stellt ein Dämpfungskraftgesetz dar, welches durch einen aktiven Kraftgenerator realisiert werden kann, der so programmiert oder gesteuert wird, daß eine zufriedenstellend generalisierte Form aktiver Dämpfung erzeugt werden kann. Diese Form wird deshalb als aktive Dämpfung bezeichnet, weil lediglich Geschwindigkeiten in der Gleichung für die Kraft auftreten. Eine allgemeine aktive Aufhängungskraft mit Zustandsgrößen-Rückführung enthält demgegenüber auch Auslenkungen einbeziehende Terme.

Betrachtet man im folgenden die der Dämpfungskraft Fd zugeordnete Leistung, dann soll diese positiv sein, wenn sie vernichtet (dissipated), also durch Dämpfung abgeführt wird; es ergibt sich dann der folgende Ausdruck:

$$P_{diss} = F_d \bullet V_{rel} = -B_A V V_{rel} + B_P V^2_{rel} . \qquad (8)$$

Das bedeutet, daß in bestimmten Bereichen der V-Vrel-Ebene Leistung vernichtet und in bestimmten Bereichen Leistung zugeführt werden muß ($P_{diss} < o$). Die Fig. 5 zeigt diese Bereiche für den Fall, bei welchem $B_A$ etwasgeringer als $B_P$ ist. Dabei ist für einen passiven Dämpfer oder für den hier betrachteten semiaktiven Dämpfer, bei welchem die Dämpfung variabel sein soll, stets $P_{diss} \geq o$. Dies bedeutet, daß in der Ebenen-Darstellung der Fig. 5 bei sämtlichen schattierten Bereichen ein semiaktiver Dämpfer die gleiche Dämpfungskraft wie ein aktives System erzeugen kann, für die nichtschattierten Bereiche ist dies jedoch unmöglich. Mit anderen Worten bedeutet dies, daß in den freigelassenen, also unschattierten Bereichen der Fig. 5 jeder passive oder halbaktive Dämpfer eine Kraft mit einem zur aktiven Dämpfungskraft der Gleichung (3) entgegengesetzten Vorzeichen erzeugen würde.

Aus der Fig. 5 ergibt sich ferner, daß dann, wenn $B_A = o$ ist, die gesamte Ebene schattiert ist und Leistung überall vernichtet wird. Andererseits würde, selbst dann, wenn $B_P = o$ und $B_A > o$ ist, die Hälfte der V-Vrel-Ebene weiter schattiert sein. Dies bedeutet, daß selbst für den rein aktiven Fall der aktive Dämpfungskraftgenerator während wesentlicher Zeiten als passiver Dämpfer wirkt. Für den in Fig. 5 gezeigten Fall, bei welchem $B_A < B$ ist, ergibt sich, daß tatsächlich nur ein kleiner Bereich der V-Vrel-Ebene eine Energiezufuhr erforderlich macht. Es ist daher ein wesentlicher Gedanke vorliegender Erfindung der semiaktiven Dämpfungskraftgeneratoren oder Dämpfer, dort, also in den schattierten Bereichen, Dämpfungskräfte zu erzeugen, wie sie auch ein aktiver Generator erzeugen würde oder müßte, wobei dann allerdings andererseits in den unschattierten Bereichen jede mögliche, von einem semiaktiven Dämpfer erzeugte Dämpfungskraft von entgegengesetzten Vorzeichen mit Bezug auf die hier gewünschte Kraft wäre, so daß die Erfindung vorschlägt, in diesen Bereichen die Dämpfungskraft im wesentlichen zu Null zu machen - $F_d \cong o$. Bei den weiter unten noch im einzelnen angegebenen konstruktiven Maßnahmen semiaktiver Dämpfer sind daher Vorkehrungen getroffen, um sicherzustellen, daß stets der Term $F_d \cong o$ immer dann erreicht wird, wenn zur Erzeugung der gewünschten gesteuerten Dämpfungskraft Energie zugeführt werden müßte. Dabei hat sich durch Untersuchungen, die auch Rechnersimulationen umfassen, ergeben, daß auch dann, wenn man mit den vorgeschlagenen Maßnahmen einer semiaktiven Dämpfung arbeitet, andererseits aber keine Energie zuführt, wesentliche Vorteile einer aktiven Geschwindigkeitsrückkopplung beibehalten sind.

Die hier angegebenen Darstellungen umfassen lediglich lineare Regler, es versteht sich aber, daß eine entsprechende Ausweitung auch auf nichtlineare Regelkonzepte möglich ist. Beispielsweise würden sich dann, wenn es erwünscht ist, für Zugkraft und Druckkraft einen unterschiedlichen passiven Koeffizienten vorzugeben, die nichtschattierten Bereiche für Pdiss < o in Fig. 5 in der oberen und der unteren Halbebene von den dargestellten unterscheiden, da die Dämpfungskraftfunktion (Fd-Funktion), wie sie in Fig. 4 gezeigt ist, dann dargestellt würde durch zwei Ebenen, die bei Vrel = 0 verbunden sind. Noch kompliziertere, nichtlineare Kraftfunktionen würden dann an den Grenzübergängen der Fig. 5 gekrümmte Konfigurationen erzeugen.

Im folgenden wird genauer auf mögliche Modulations-Schemata für semiaktive Dämpfer eingegangen, zusammen mit der Angabe gegenständlicher Lösungsmittel für solche semiaktiven Systeme, damit in den in den Figuren 4 und 5 dargestellten Bereichen ein semiaktiver Dämpfer genau die gleiche Dämpfungskraftwirkung erzeugt wie ein aktiver Kraftgenerator. Hier sind einige Möglichkeiten gegeben, einen semiaktiven Dämpfer durch entsprechende Steuerung oder Kontrolle an das Verhalten eines aktiven Elements anzunähern bzw. zu approximieren. Dabei ist es natürlich möglich, einen aktiven Dämpfer zur Krafterzeugung in Abhängigkeit zu Positions- oder Beschleunigungssignalen zu veranlassen (wie eine aktive Feder oder ein Massenelement), andererseits hat eine Dämpfungskraft eine bestimmte Phasenbeziehung zu Positions- und Beschleunigungsvariablen, die es als unwahrscheinlich erscheinen läßt,daß der Dämpfer in dieser Weise wirksam eingesetzt werden kann.

Eine Möglichkeit zur Modulation eines semiaktiven Dämpfers besteht in der Verwendung eines Ventils, bei welchem die Öffnung für den Fluidfluß (Druckmittelfluß) eine Funktion der linearen Position oder Winkelposition eines bestimmten Elementes ist. Üblicherweise wird die Position des Ventils von einem elektromagnetischen Wandler gesteuert. Die Position kann dabei zwischen zwei Extremwerten umgeschaltet oder kontinuierlich verändert werden.

Betrachtet man beispielsweise ein linearisiertes Ventil, bei welchem ein Dämpfungskoeffizient kontinuierlich verändert werden kann, dann kann, weil Fluidwiderstände die Tendenz zu quadratischen Druck-Flußbeziehungen haben, eine lineare Koeffizientenbeziehung nur als Annäherung vorausgesetzt werden. Der effektive Dämpfungskoeffizient Beff wird zunächst wie folgt definiert:

$$Fd = Beff \bullet Vrel = B_P Vrel - B_A V , \qquad (9)$$

wobei durch entsprechende Betätigung des Ventils Beff kontinuierlich variiert wird, also mit

$$o < Beff < \infty . \qquad (10)$$

Der Darstellung der Fig. 6 läßt sich entnehmen, wie der Koeffizient Beff variiert werden muß, um das in Gleichung (4) angegebene Dämpfungsgesetz in allen den Regionen der V-Vrel-Ebene, in denen dies möglich ist, zu reproduzieren. In den Bereichen, in denen eine Leistungs- oder Energiezufuhr erforderlich ist, wird dann Beff zu Null gesetzt, also Beff ≅ o, so daß jedenfalls eine Kraft mit dem falschen Vorzeichen nicht erzeugt wird.

Dabei lassen sich mit Bezug auf die Darstellung der Fig. 6 noch einige Überlegungen zu den ins Auge gefaßten Modulations-Schemata durchführen. Der Umstand, daß in einigen Regionen Beff → ∞ geht, ist nicht problematisch; dies bedeutet lediglich, daß der Durchflußbereich verschwinden muß. Angrenzend zu diesen Regionen ist das System vergleichsweise empfindlich, wobei dann, wenn nur ein Ventil kontrolliert wird, eine geringe Änderung in der Relativgeschwindigkeit Vrel eine sehr schnelle Änderung der Ventilöffnung von nahe Null auf voll geöffnet erforderlich macht. Solange das Ventil niemals vollständig geschlossen ist, ist diese Schwierigkeit aber relativiert, wobei natürlich die erforderliche Frequenzabhängigkeit des Ventils damit zu tun hat, wie schnell dieser Schalter arbeiten muß. Einige der im nachfolgenden noch genauer erläuterten Dämpfer/Ventil-Ausführungsformen enthalten Rückschlagventile, die dann automatisch öffnen, wenn die Relativgeschwindigkeit Vrel das Vorzeichen ändert und diese Umschaltung daher automatisch durchführen. Grundsätzlich ergibt sich dabei dann, wenn eine Kraft mit vorgegebenem Vorzeichen entsprechend Gleichung (3) erforderlich ist und Vrel auf ein Vorzeichen überwechselt, welches als Ergebnis eine Kraft des entgegengesetzten Vorzeichens hat, daß das Rückschlagventil öffnet und die Dämpfungskraft zu Null macht (Fd ≅ o), selbst im Falle, daß das Ventil in seiner Ursprungsposition verbleibt. Dies trägt dazu bei, unerwünschte Impulskräfte zu verhindern, falls das Ventil nicht schnell genug reagieren kann, so daß

die notwendige Reaktionsgeschwindigkeit hierdurch reduziert werden kann. Dabei zeigen die beiden Darstellungen der Fig. 6 im oberen Bild die Abhängigkeit von

$$\text{Beff} = B_P - B_A \frac{V}{Vrel} \geqq o,$$

während im unteren Bild der Fig. 6 - die Konturlinien stellen Beff = const. dar - ein semiaktiver Dämpfer mit moduliertem Dämpfungskoeffizienten Beff gezeigt ist.

Schließlich ist in der Darstellung der Fig. 7 die von einem aktiven Dämpfer erzeugte Kraft gezeigt, die so gesteuert ist, daß das in Fig. 4 angegebene Kraftgesetz immer dann, wenn dies möglich ist, erfüllt wird. Wenn es gelingt, den im Schema der Fig. 6 angegebenen variablen Dämpfungskoeffizienten genau zu realisieren, dann wäre dies das Ergebnis. Dieses Kraftgesetz kann aber auch direkter durch Auslegung eines Ventilmechanismus realisiert werden, bei welchem die Kraft direkt gesteuert wird. Als ein mögliches Ausführungsbeispiel wird auf die weiter unten noch im einzelnen genauer erläuterte Darstellung der Fig. 10 verwiesen, bei welcher eine elektromagnetisch gesteuerte Kraft Tellerventilen zugeführt ist, die den Zylinderdruck nahezu unabhängig vom Fluß kontrollieren. Bei diesem System ist eine Kraftverstärkung im Verhältnis von Kolben zu Ventilfläche eingebaut. Ferner verhindern die Rückschlagventile die Erzeugung von Kräften mit falschem Vorzeichen, so daß die Frequenzabhängigkeit der elektromagnetischen Kraftgeneratoren nicht notwendigerweise besonders hoch zu sein braucht.

Indirekte Mittel zur Erzielung des in Fig. 7 gezeigten Kraftgesetzes unter Verwendung einer Ventilpositions-Modulation können realisiert werden durch Verwendung von Kraftrückkopplung und dem Schema nach Fig. 6.

Dies würde gleichzeitig einige der Empfindlichkeitsprobleme beseitigen, die sich bei der Koeffizienten-Steuerung ergeben, jedoch mit der Notwendigkeit eines Kraftsensors und einer Ventil-Regelschleife, die auf die gemessene Kraft reagiert.

In Fig. 8 ist schließlich ein vereinfachtes System dargestellt, bei welchem ein passiver Dämpfer einfach, auf der Basis des aktiven Dämpfer-Kontrollgesetzes, ein- und abgeschaltet wird. Das Ergebnis ist ein passives System, welches immer dann abgeschaltet wird, wenn die aktive Dämpferkraft ein Vorzeichen aufweist, welches zu dem, welches passiv erzeugt werden kann, entgegengesetzt ist. Dabei ist in den meisten Bereichen der V-Vrel-Ebene der Einfluß der Geschwindigkeit V auf die Dämpferkraft Fd nicht vorhanden, jedoch wird der semiaktive Dämpfer in den Bereichen, in denen das aktive System Energie zuführen würde, während ein passives Energie vernichten würde, einfach abgeschaltet. Dabei haben Untersuchungen, insbesondere anhand von Rechnersimulationsmodellen und auch im praktischen Betrieb aber ergeben, daß selbst dieses vereinfachte Schema der Fig. 8 erhebliche Vorteile insgesamt aufweist. Zu bemerken ist noch, daß sämtliche der nachfolgenden Ausführungsbeispiele von semiaktiven Dämpfern in dieser Weise betrieben werden können.

Diese theoretischen Überlegungen im wesentlichen abschließend läßt sich also feststellen, daß in der Praxis auch ein aktiver Dämpfer im wesentlichen und für den größten Teil seines zeitlichen Einsatzes Leistung oder Energie vernichtet, so daß die erfindungsgemäße Grundkonzeption eines semiaktiven Dämpfers mit einer Modulation auf der Ebene einer Steuer- oder Signalleistung häufig in der Lage ist, die gleichen Kräfte wie ein aktiver Dämpfer zu erzeugen. Tatsächlich kann der semiaktive Dämpfer dann, wenn ein aktiver Dämpfer Energie zuführt, mindestens abgeschaltet werden, so daß nahezu keine Energie vernichtet wird. Die nachfolgenden Ausführungen beschäftigen sich dann im wesentlichen mit den verschiedenen Möglichkeiten, einen semiaktiven Dämpfungskraftgenerator auszulegen und zu steuern. Entsprechend den weiter vorn angegebenen Erläuterungen erfolgt die Dämpfungskraftsteuerung durch Auswerten vorzugsweise der Geschwindigkeitsangaben V, also beim Anwendungsbeispiel auf Kraftfahrzeugaufhängungen die Absolutgeschwindigkeit des Aufbaus, die meßtechnisch in geeigneter Weise erfaßt werden kann, beispielsweise durch Beschleunigungsaufnehmer und nachfolgende Integration, und der Relativgeschwindigkeit Vrel zwischen Aufbau und Rad, die ebenfalls in geeigneter Weise gemessen werden kann, beispielsweise dadurch, daß man, wie für sich gesehen bekannt, die Signale von Positionsdetektoren an Rad und Aufbau oder den Verschiebeweg der Dämpferbewegung oder ähnliches erfaßt. Im folgenden werden solche Maßnahmen zur Gewinnung von Sensorsignalen als für sich gesehen bekannt vorausgesetzt (sie sind im übrigen ja auch in der weiter vorn schon erwähnten US-A 3 807 678 erwähnt), desgleichen wird nicht genauer auf die spezielle Art der Bewegungen der jeweiligen Ventilglieder bei den nachfolgend beschriebenen semiaktiven Dämpfern eingegangen, da solche Bewegungen aus den ermittelten Signalen in üblicher Weise, etwa durch Magnete, elektromagnetische Einwirkungen allgemein, motorische Steuerung u. dgl. abgeleitet werden können. Alle nachfolgend beschriebenen Ausführungsformen von semiaktiven Dämp-

EP 0 197 316 B1

fern haben gemeinsam die Anordnung von mindestens einem (ungesteuerten) Rückschlagventil sowie eines sogenannten Hauptventils mit variabel asymmetrischem Dämpfungscharakter, wobei von besonderer Bedeutung die asymmetrische Wirkung dieses Ventils in Verbindung mit Rückschlagventilen zur Realisierung der weiter vorn im einzelnen angegebenen Dämpfungskraftverläufe ist.

Der in Fig. 9 gezeigte semiaktive Stoßdämpfer kann zwischen einer (nicht dargestellten) Fahrzeugachse und einem (nicht dargestellten) Fahrzeugaufbau angeordnet sein und besteht im grundsätzlichen Aufbau stets aus einer Zylindereinheit 10 und einem in dieser gleitenden Kolben 11, wobei zwei Arbeitskammern 12a und 12b gebildet sind, die durch den Kolben getrennt und beim Arbeiten des Dämpfers in ihren Volumina selbstverständlich variabel sind. Der Kolben ist von einer Kolbenstange 11a getragen, die beispielsweise am Fahrzeugaufbau befestigt sein kann, dann ist der Zylinder 10 an der Fahrzeugachse angeordnet. Die beiden Arbeitskammern 12a und 12b sind über jeweils eine Leitung 14a, 14b, die sich wieder in Zweigleitungen 14a' und 14a'' sowie 14b' und 14b'' aufteilen, mit einem beispielsweise hydropneumatischen Speicher 15 verbunden (nämlich über die Zweigleitungen 14a' und 14b'), wobei in diesen Zweigleitungen auch jeweils Rückschlagventile 16a, 16b liegen, die als federvorgespannte Kugelventile ausgebildet sind und bei einem Druckmittelfluß oder Fluidumsfluß aus der jeweils zugeordneten Arbeitskammer heraus (beispielsweise zum Speicher) sperren.

Vor dem Speicher vereinigen sich die beiden Zweigleitungen 14a', 14b' bei 17; die beiden anderen Zweigleitungen 14a'' und 14b'' bilden Eingangs- oder Ausgangs-Druckleitungen zu einem variablen asymmetrischen Dämpfungsventil 18, welches über den Verbindungspunkt 17 mit einer weiteren Leitung 19 ebenfalls mit dem Speicher 15 bzw. den beiden anderen Zweigleitungen 14a', 14b' verbunden wird.

Bei dem in Fig. 9 dargestellten Ausführungsbeispiel besteht das asymmetrische Dämpferventil aus einem in einer zylindrischen Bohrung 20 axial gleitverschieblich gelagerten Ventilglied 21 von ebenfalls im wesentlichen zylindrischer Form, jedoch mit einer mittleren Einschnürung 22, die zu den angrenzenden Gleitflächen beispielsweise kegelstumpfförmig sich vergrößernd übergeht. Die beiden mit den Zweigleitungen 14a'' und 14b'' verbundenen Ventilanschlüsse 23a und 23b auf der gleichen Seite sind in der Ventilglied-Stellbewegung höhenversetzt; der andere Ventilanschluß 19 ist zentral angeordnet.

Daher ist die Funktion des in Fig. 9 gezeigten Dämpfers so, daß bei einer beliebigen Position des Ventilglieds 21 in der einen Richtung, beispielsweise wenn bei Auftreffen auf ein Hindernis der Stoßdämpfer zusammengedrückt wird, über die Zweigleitung 14b'' Druckmittel über das Ventil mit vorgegeben angenommenem Ventilwiderstand und daher entsprechendem Dämpfungswiderstand in die Leitung 19 und von dieser über das Rückschlagventil 16a zur anderen Arbeitskammer fließen kann, was einer angenommenen positiven Dämpfungskraft entsprechen soll. Ist sofort darauffolgend ($\dot{\Delta s}<o$) eine dann nur minimale negative Dämpfungskraft erforderlich, dann ermöglicht das Rückschlagventil 16b in diesem Fall das schnelle Auseinanderziehen des Kolben-Zylinderaggregats, da in diesem Fall das Druckmittel aus der in der Zeichenebene oberen Arbeitskammer 12a über das wegen seiner Asymmetrie in diesem Falle und in der beibehaltenen Position praktisch widerstandsfreie Dämpferventil 18 und über das Rückschlagventil 16b in die andere Kammer fließen kann. Durch die Verschiebbarkeit des Ventilglieds 21 ergibt sich dann die variable asymmetrische Dämpfungsmöglichkeit. Ein solcher semiaktiver Dämpfer ist daher in der Lage, die im kleinen Diagramm rechts oben über der Geschwindigkeit aufgetragenen (nichtlinearen) Dämpfungskraftverläufe zu erzeugen, wobei jeweils Kurven gleicher Form, also durchgezogen, gestrichelt oder mit großem Abstand gestrichelt, zusammengehören. Befindet sich das Ventilglied beispielsweise symmetrisch in der Mitte der Anschlußposition ($x = o$), dann ergeben sich für beide Geschwindigkeitsrichtungen gleiche Dämpferkräfte; bei den jeweiligen Anschlagpositionen des Ventilglieds ($x = x_{max}$; $x = x_{min}$) ergeben sich stark unsymmetrisch oder nichtlinear verlaufende Dämpferkräfte für die eine und die andere Geschwindigkeitsrichtung.

Es versteht sich, daß das variabel asymmetrische Dämpferventil 18 einer Vielzahl von Variationen zugänglich ist; so kann beispielsweise das Ventilglied 21' auch so wie beim Dämpferventil 18' in der rechten unteren Ecke der Zeichnung der Fig. 9 angegeben ausgebildet sein; die Stellbewegung ist dann eine Drehung x', und man erkennt durch die beidseitig in gleicher Richtung schräg verlaufenden Übergangsflächen 24, daß das Ventil asymmetrisches Verhalten gewährleistet, was im Grunde bedeutet, daß die beiden Ventilanschlüsse 23a, 23b zum Anschluß 19 auf der anderen Seite bei einer vorgegebenen Ventilgliedposition einen unterschiedlichen Flußwiderstand erfahren, allgemein gesagt also das Ventil für die beiden Anschlüsse 23a, 23b in jeder Position (mit Ausnahme der Mittenposition) unterschiedliche Öffnungsquerschnitte aufweist.

Bei der Erläuterung der nachfolgenden Ausführungsformen wird zunächst darauf hingewiesen, daß nur auf solche Merkmale eingegangen wird, die sich als unterschiedlich zu der mit Bezug auf Fig. 9 beschriebenen Grundkonzeption unterscheiden; grundsätzlich gilt für alle Ausführungsformen, daß die Dämpferventile so ausgelegt sind, daß sie eine eingebaute Asymmetrie mit Bezug auf die relative Geschwindigkeit aufweisen. Ergeht dann an das Dämpferventil der Befehl, beispielsweise eine Zugkraft (Zug und Druck sind hier mit Bezug auf die von außen auf den Dämpfer einwirkenden Möglichkeiten bezogen), dann erzeugt das Ventil automatisch nur eine sehr geringe Druckkraft, selbst dann, wenn die relative Geschwindigkeit in der Druckrichtung verläuft. Ist ein solches Verhalten direkt in das Ventil eingebaut, dann sind die Anforderungen bezüglich des Frequenz-Ansprechverhaltens an das Ventil geringer und auch der Regler oder die elektrische Steuerschaltung kann vereinfacht werden.

Mit Ausnahme des Ausführungsbeispiels der Fig. 10, bei welchem die Ventilkraft mehr oder weniger direkt gesteuert ist, wird bei den anderen Ausführungsbeispielen der Ventilwiderstand durch die Ventilposition bestimmt. Im einfachsten Fall können die Dämpfer oder Steuerventile einfach als Folge des zugeführten Signals umgeschaltet werden, wobei das Signal beispielsweise das Meßergebnis der absoluten Aufbaugeschwindigkeit sein kann. Kontinuierliche Veränderungen des Ventilwiderstandes oder der erzeugten Dämpferkraft sind durch Kraftrückführungs-Schaltungen möglich. Dabei ist es ein wesentliches Merkmal der erläuterten Ausführungsbeispiele, daß in Verbindung mit dem grundlegenden Ventilmechanismus, also mit dem Dämpferventil, jeweils Rückschlagventile vorgesehen sind, so daß der Ventilbereich allgemein so intelligent wie möglich gemacht werden kann. Dabei sei erwähnt, daß ein bestimmter, wenn auch geringer passiver Dämpfungsbeitrag (beispielsweise eine Kraftkomponente proportional zu oder als Funktion der relativen Geschwindigkeit) stets erforderlich ist, und zwar aufgrund der geringen Dämpfungseigenschaften der ungefederten Masse auf die "Reifenfeder". Es ist daher nicht notwendig, daß die Dämpferventile insoweit absolut "perfekt" arbeiten; tatsächlich sollten die Dämpferventile mechanisch durch Anschläge begrenzt sein, so daß das Dämpfungsgesetz nicht zu weitgehend variiert werden kann, was sonst möglicherweise einen gefährlichen Zustand im Falle eines Ausfalls der Steuerungseinrichtung oder bei Störungen im Ventil selbst, bedeuten könnte.

Bei dem Ausführungsbeispiel der Fig. 10 sind die beiden Arbeitskammern, die auch hier wieder mit 12a und 12b bezeichnet werden, wiederum direkt über die beiden Rückschlagventile 16a, 16b miteinander und mit einem hydropneumatischen Speicher über eine Querleitung 25 verbunden, wobei dieser Ausgleichsspeicher in eine Ringausnehmung 26 des Zylinders selbst verlegt und mit 15' bezeichnet ist. Parallel zu den jeweiligen Rückschlagventilen 16a, 16b sind, wie auch beim Ausführungsbeispiel der Fig. 9, dann hier geteilte Bereiche 18a', 18b' des Dämpferventils angeordnet, die jeweils ein Tellerventil darstellen, bei denen also der Ventileinlaß oder -auslaß 27 durch beispielsweise direkt elektromagnetisch gesteuerte Kräfte aufgebracht wird, die den Ventilteller 28 zur Anlage (Verschluß des Teilventils) oder zum Abheben (Öffnung des Teilventils) bewegen. Bei der Darstellung der Fig. 10 ist das obere Teilventil 18a' für auf den Dämpfer einwirkende Zugkräfte und deren Dämpfung und das untere auf einwirkende Druckkräfte gerichtet. Die elektromagnetisch erzeugten Druck- oder Zug-Steuerkräfte werden hier hydraulisch verstärkt.

Das Ausführungsbeispiel der Fig. 11 stellt eine nur an eine Arbeitskammer 12' angeschlossene Druckmittel-Steuerungsmöglichkeit dar, wobei eine von der Arbeitskammer 12' ausgehende Druckleitung 29 sich in zwei Teilleitungen 29' und 29'' aufteilt, in die jeweils ein Rückschlagventil 16a', 16b' geschaltet ist, die in Reihe geschaltet sind mit einem Dämpferventil 18', welches bei gleicher Bezeichnung daher auch so aufgebaut ist, wie die alternative Ventilausbildung beim Ausführungsbeispiel der Fig. 9, mit den gleichen Wirkungen. Die einzige, weiterführende Ventilanschlußleitung 30 ist mit dem hydropneumatischen Speicher oder Ausgleichsbehälter 15 verbunden; eine Zweigleitung 31 kann an eine nicht weiter dargestellte Last-Ausgleichseinrichtung (load leveler) angeschlossen sein.

Die folgenden Ausführungsbeispiele der Figuren 12 und 13 unterscheiden sich von den bisher erläuterten Ausführungsbeispielen dadurch, daß der gesamte Ventilmechanismus (Rückschlagventile und variabel asymmetrisches Dämpferventil) im Kolben des Dämpfers angeordnet ist. Der Kolben ist mit 32 bezeichnet; er enthält beidseitige, sich in die Arbeitskammern 12a, 12b öffnende Durchlässe 33a, 33b, die zu einem Dämpferventil 18' führen, welches in seinem grundsätzlichen Aufbau und in seiner Wirkungsweise dem in Fig. 9 schon erläuterten Dämpferventil 18' mit Drehglied entspricht, wozu eine Steuerstange 33 vorgesehen ist, die Kolben und Kolbenstange 34 durchsetzt und zu einem Antriebsglied 35 geführt ist.

Die hier noch erforderlichen Rückschlagventile sind als einfache Klappenventile mit 36a, 36b bezeichnet; sie verbinden den jeweils einen Dämpferventilanschluß 37 mit den beiden Arbeitskammern 12a, 12b und gleichzeitig über eine zunächst im Kolbenstangeninneren verlaufende Leitung 38 mit dem außenliegenden hydropneumatischen Speicher 15. Die grundsätzliche Wirkungsweise dieses Ausführungsbeispiels entspricht dem weiter vorn erläuterten; für jede Druckmittel-Flußrichtung muß immer jeweils ein Rückschlagventil und eines der Durchgänge des variabel asymmetrischen Dämpferventils 18' passiert werden, so daß sich auch hier die in den verschiedenen Diagrammverläufen dargestellten Dämpferkräfte ergeben.

Auch der in Fig. 13 dargestellte Ventilmechanismus entspricht nach grundsätzlichem Aufbau und Wirkungsweise dem Ventilmechanismus der Fig. 12, mit der Ausnahme, daß hier das Dämpferventil 18'' zwar ebenfalls ein Drehventilglied 39 enthält, jedoch für niedrigen Druck bei gleichzeitig hohem Durchfluß ausgelegt ist. Die die jeweiligen Arbeitsräume 12a, 12b mit dem Dämpferventil verbindenden Leitungen sind mit 40a, 40b bezeichnet; sie münden jeweils in Ringausnehmungen in der Struktur des Kolbens 32'; diese Ringausnehmungen sind so ausgebildet, daß sie Fenster aufweisen, die, je nach der Winkelposition des Drehventilglieds 39 entweder auf fensterartige, über den Umfang des beispielsweise topf- oder büchsenartig ausgebildeten Drehventils laufende Durchlaßöffnungen 41 gerichtet sind (Ventil geöffnet) oder gegenüber diesen Durchlaßöffnungen versetzt sind, so daß das Ventil, jedenfalls für diesen Anschlußbereich, gesperrt ist. Zur Realisierung des asymmetrischen Ventilverhaltens sind jetzt die auf die unterschiedlichen Ringausnehmungen 42a, 42b im Kolben gerichteten Durchlaßfensterreihen im Drehventilglied 39 zueinander versetzt, was sich aus der Zeichnung bei Vergleich der oberen Fenster zu den unteren gut erkennen läßt. Das bedeutet, daß in den beiden Extremstellungen entweder dann nur die oberen Fenster zum Durchlaß des Druckmittels auf die entsprechenden Fenster in der Ringausnehmung gerichtet sind, oder die unteren oder natürlich jede denkbare Zwischenlösung möglich ist, so daß das variable asymmetrische Ventilverhalten sichergestellt ist. Die Rückschlagventile können einfach federnde Klappen 44a, 44b auf beiden Kolbenseiten sein, die einen gemeinsamen Seitenkanal 45 im Kolben, je nach der Kolbenbewegung, verschließen oder sich in diesen öffnen können, wobei dieser Kanal 45 mit dem einen (gemeinsamen) Anschluß 43 des Dämpferventils 18'' in Verbindung steht; über eine zentrale Durchtrittsöffnung 38 in der Kolbenstange ist dann noch die Verbindung zu dem bei diesem Ausführungsbeispiel nicht dargestellten hydropneumatischen Speicher 15 vorgesehen.

Eingesetzt werden können die beschriebenen semiaktiven Dämpfer mit variabel asymmetrischem Dämpferverhalten beispielsweise bei Aufhängungssystemen der Art, wie sie in Fig. 14 schematisch dargestellt sind; das Aufhängungs- oder Federungssystem der Fig. 14 benutzt Luft oder ein sonstiges gasförmiges Medium als Druckmittel und enthält als wesentliches Element einen Druckraum 55, in welchem ein von einem Kolbenteller 56 bewegter Trennbalg 57 abrollt. Der Kolbenteller 56 verbindet über eine Kolbenstange 58 die Radmasse 59 mit der Aufbaumasse 60' beispielsweise eines Fahrzeugs; in der Aufbaumasse ist der Druckraum 55 enthalten. Der Druckraum 55 ist über ein Umschaltventil 60 mit einem die Federungseigenschaften des Aufhängungssystems bestimmenden Mechanismus 61 verbunden,der in einer Zylindereinrichtung 62 einen Stellkolben 63 enthält, der durch gesteuerten Antrieb von außen, hierbei Sensorsignalen beispielsweise über Beschleunigung, Fahrgeschwindigkeit, Lenkeinschlag, Straßenzustand u. dgl. folgend, axial verstellt wird, wodurch sich je nach Position des Kolbens 63 die Federungshärte des Systems vorgeben läßt. Bei fehlendem Steuerantrieb für den Kolben 63 sorgt eine Blockiereinrichtung 64 für Kolbenstillstand, so daß die Federungshärte im wesentlichen konstant bleibt. Der Kolben 63 sitzt mit einem gewissen Leckspiel A23 in der Zylindereinheit, so daß sich ein statischer Druckausgleich ergibt. Ferner ist der Druckraum 55 mit einer Lastausgleichseinrichtung über eine Leitung 65 verbunden, wobei ein Stellventil 66 vorgesehen ist, welches die Leitung 65 entweder mit einer Druckmittelzufuhrleitung 67 oder mit einer Ablaßleitung 68 verbindet. Dieses Federungssystem mit einstellbarer Federhärte durch beliebig steuerbare Vorgabe der Position des Kolbens 63 wird mit besonderem Vorteil durch eine Dämpfungseinrichtung ergänzt, wie weiter vorn erläutert ist und wie sie in der Fig. 14 mit 69 bezeichnet ist. Es ist dann möglich, aus der Vielzahl der für die Einstellung der Federungshärte beispielsweise über entsprechende Sensoren gewonnene Signale auch, gegebenenfalls nach entsprechender Aufbereitung, für die Einstellung des Dämpferventils bzw. allgemein für die Dämpferansteuerung zu verwenden oder umgekehrt, wobei Positionssignale gleichzeitig auch die Lastausgleichseinrichtung beaufschlagen können.

## Patentansprüche

1. Vorrichtung zur Dämpfung von Bewegungsabläufen von zwei relativ zueinander und in ihren absoluten Positionen mit veränderbaren Geschwindigkeiten sich bewegender Körper oder Massen, insbesondere zur Dämpfung federnder Rad-Aufhängungssysteme bei Fahrzeugen, Straßenfahrzeugen, Bussen, Bahnen u. dgl., mit einem Kolben/Zylinderaggregat, bei dem Zylinder und Kolben mit jeweils einem der Körper verbunden sind und momentane, dynamischen Fahrbedingungen entsprechende Signale von Sensoren an beiden Körpern erfaßt und zur Durchflußsteuerung eines gemeinsamen Mehrwege-Dämpferventils oder von zwei separaten Dämpferventilen verwendet sind, wobei mindestens eine Arbeitskammer des Kolben/Zylinderaggregats durch das (die) Dämpferventil(e) mit einem Speicher für das Druckmittel verbunden sind (ist), mit einer Ansteuerung des oder der Dämpferventil(e) derart, daß dort, wo sich Dämpfungskräfte mit im Vergleich zu der jeweils durch die Bewegungsabläufe erwünschten oder erforderlichen Dämpfungskraft entgegengesetztem Vorzeichen ergeben, die Dämpfungskraft im wesentlichen zu Null gemacht wird ($Fd$ = Null), wobei

die Sensoren so ausgebildet sind, daß sie die Relativgeschwindigkeit ($V_{rel}$) der beiden Körper und

EP 0 197 316 B1

die Absolutgeschwindigkeit (V) mindestens einer der Körper erfassen;

für beide Bewegungsrichtungen (Zugstufe und Druckstufe) jeweils ein, insgesamt also zwei Rückschlagventile vorgesehen sind, die in Reihe oder parallel zu dem (den) Dämpferventil(en) die mindestens eine Arbeitskammer ebenfalls mit dem Speicher verbinden und

das oder die Ventilstellglied(er) des oder der Dämpferventile vom Kombinationssignal beider Sensoren und damit in Abhängigkeit zur Relativ- und Absolutgeschwindigkeit (V; $V_{rel}$) zur Erzeugung einer gewünschten kombinierten Dämpfungskraft über beliebige Zwischenpositionen kontinuierlich angesteuert sind (ist),

dadurch gekennzeichnet, daß

a) das eine Ventilstellglied (21, 21') bei lediglich einem Mehrwege-Dämpfungsventil (18, 18') bzw. die beiden Ventilstellglieder bei separaten Dämpfungsventilen (18a, 18b) seinen (ihre) Öffnungsquerschnitt(e)für Zug- und Druckstufe grundsätzlich in beiden Richtungen, jedoch im gegenläufigen Sinn, also für die jeweils zu einem gegebenen Zeitpunkt auftretenden Durchflußrichtungen asymmetrisch (asymmetrisches Dämpfungsverhalten) freigibt (freigeben);

b) daß die Ventilstellglieder von Sensorsignalen gesteuert sind, die gleichzeitig die Relativgeschwindigkeit ($V_{rel}$) und die Absolutgeschwindigkeit (V) erfassen und ein Kombinationssignal erstellen, welches eine Sollwert-Dämpfungskraft beschreibt (Fd = $-B_A \cdot V + B_P \cdot V_{rel}$), wobei $B_A$ ein aktiver Dämpfungskoeffizient und $B_P$ ein passiver Dämpfungskoeffizient ist und

c) daß die Dämpfungsvorrichtung eine dieser Formel entsprechenden Dämpfungskraft Fd erzeugt, wobei dort, wo die Zuführung einer aktiven Dämpfungskraft an sich erforderlich wäre (d.h. wo Pdiss < 0, Pdiss = Fd $\cdot V_{rel}$), die Dämpfungskraft im wesentlichen auf Null reduziert ist (Fd = Null).

2. Vorrichtung nach Anspruch 1, dadurch gekennzeichnet, daß die Dämpfungskraft dann im wesentlichen auf Null reduziert ist, wenn der aus der Kombination der Sensorsignale abgeleitete Sollwert der kombinierten Dämpfungskraft (Fd = $-B_A \cdot V + B_P \cdot V_{rel}$) ein algebraisches Vorzeichen ( + oder -) aufweist, welches den durch die dynamischen Bewegungsabläufe der beiden Körper erforderlichen Dämpfungskräften entgegengesetzt ist.

3. Vorrichtung nach Anspruch 1 oder 2, dadurch gekennzeichnet, daß das Mehrwege-Dämpferventil (18, 18'; 18a', 18b') ein Ventil mit drei Anschlüssen (23a, 23b; 19) ist, mit einem durch Ansteuerung axial verschiebbaren, zylindrischen Ventilglied (21) und mit einer zentralen Ausnehmung (22) derart, daß die Axialverschiebung des Ventilglieds (21) die eine Durchflußrichtung in dem Maße schließt, wie die andere geöffnet wird (Fig. 9 - erste Alternative).

4. Vorrichtung nach einem der Ansprüche 1 oder 2, dadurch gekennzeichnet, daß das Dämpferventil (18') ein Drehventilglied (21') enthält, welches eine zentrale Ausnehmung mit schräg verlaufenden Begrenzungswänden enthält, derart, daß bei Drehung des Ventils durch entsprechende Sensorsignalansteuerung die eine Durchlaßrichtung (Zug oder Druck) in dem Maße zunehmend geschlossen wird, wie die andere Durchlaßrichtung (Druck oder Zug) geöffnet wird (Fig. 9 - zweite Alternative).

5. Vorrichtung nach Anspruch 1 oder 2, dadurch gekennzeichnet, daß jedem jeweils eine der Arbeitskammern (12a, 12b) direkt mit dem Speicher (15') verbindendem Rückschlagventil (16a, 16b) ein separates Dämpferventil (18a', 18b') parallelgeschaltet ist, jeweils mit Tellerventilgliedern (28), die elektromagnetisch, entweder durch einfache Umschaltung oder kontinuierlich in entgegengesetztem Sinn in ihre Öffnungs- und Schließstellungen überführbar sind, wobei ein Ventilteil (18a') für die Zugstufe und das andere Ventilteil (18b') für die Druckstufe zuständig ist (Fig. 10).

6. Vorrichtung nach Anspruch 5, dadurch gekennzeichnet, daß der über die Rückschlagventile (16a, 16b) und die variabel asymmetrisch gesteuerten Dämpferventile (18a', 18b') mit den beiden Arbeitskammern (12a, 12b) verbundene hydropneumatische Speicher (15, 15') in einer Ringkammer (26) im Zylinder angeordnet ist(Fig. 10).

7. Vorrichtung nach Anspruch 1 oder 2, dadurch gekennzeichnet, daß bei lediglich einer Arbeitskammer (12') des Kolben/Zylinderaggregats dieses über eine sich in zwei Zweigleitungen (29', 29'') aufteilende Verbindungsleitung (29) jeweils mit antiparallel geschalteten Rückschlagventilen (16a', 16b') und weiterführend mit dem Dämpferventil (18') verbunden ist, dessen anderer Anschluß an den hydropneumatischen Speicher (15) angeschlossen ist (Fig. 11).

12

**8.** Vorrichtung nach Anspruch 7, dadurch gekennzeichnet, daß das Ventilglied des Dämpferventils (18') ein Drehventilglied ist.

**9.** Vorrichtung nach Anspruch 1 oder 2, dadurch gekennzeichnet, daß ein die Rückschlagventile (36a, 36b; 44a, 44b) und das variabel asymmetrische Dämpferventil (18', 18'') umfassender Ventilmechanismus im Kolben (32, 32') des Kolben/Zylinderaggregats angeordnet ist (Fig. 12, Fig. 13).

**10.** Vorrichtung nach Anspruch 9, dadurch gekennzeichnet, daß der Kolben (32) in einer zentralen, mit der oberen und der unteren Arbeitskammer (12a, 12b) verbundenen Bohrung ein variabel asymmetrisches Dämpferventil (18') mit Drehventilglied aufnimmt, daß das Drehventilglied durch die hohle Kolbenstange von einer Steuerstange (33) betätigbar ist, daß der andere Dämpferventilanschluß (37) über Rückschlag-Klappventile (36a, 36b) mit der oberen und der unteren Arbeitskammer (12a, 12b) verbunden ist, und daß die hohle Kolbenstange gleichzeitig den einen Dämpferventilanschluß (37) mit einem externen dydropneumatischen Speicher (15) verbindet (Fig. 12).

**11.** Vorrichtung nach Anspruch 9, dadurch gekennzeichnet, daß zur Erzielung niedriger Druck- und hoher Flußverhältnisse das Ventilglied (29) im Kolben topfartig und zur beliebig asymmetrischen Durchflußwiderstandsbildung drehbar ausgebildet ist, mit aus einzelnen Durchlaßfenstern (41) in zwei Reihen gebildeten Öffnungen, die auf jeweils zugeordnete, mit der oberen und der unteren Arbeitskammer (12a, 12b) verbundene Durchtrittsöffnungen für das Druckmittel ausgerichtet sind, wobei die Öffnungen in den beiden Reihen zueinander um eine Schrittbreite versetzt sind zur asymmetrischen Durchflußvariation (Fig. 13).

**12.** Vorrichtung nach einem oder mehreren der Ansprüche 1 bis 11, dadurch gekennzeichnet, daß der so gebildete semiaktive Dämpfer mit variabel asymmetrischem Dämpferventil Teil eines Luftfederungs-Aufhängesystems ist, bei welchem eine von einem Rollbalg (57) abgeschlossene Druckkammer (55) über ein Umschaltventil (60) mit einer die Federhärte verstellenden Kolbenzylindereinrichtung (61) in Verbindung steht (Fig. 14).

## Claims

**1.** Device for damping motions of two bodies or masses moving with changeable speeds in relation to one another and in their absolute positions, in particular for damping spring-mounted wheel suspension systems in vehicles, road vehicles, buses, track vehicles and the like, having a piston/cylinder assembly in which the cylinder and piston are in each case connected to one of the bodies and momentary signals, corresponding to dynamic driving conditions, are detected by sensors on both bodies and used for controlling the throughflow of a common multipath damper valve or of two separate damper valves, at least one working chamber of the piston/cylinder assembly being connected through the damper valve(s) having a reservoir for the pressure means, having a drive of the damper valve(s) in such a way that at the point where damping forces are obtained with a sign which is opposite in comparaison with the damping force in each case desired or required by the motions, the damping force being essentially set to zero (Fd = zero), the sensors being constructed in such a way that they detect the relative speed ($V_{rel}$) of the two bodies and the absolute speed (V) of at least one of the bodies; for both movement directions (rebound travel and compression travel) in each case one, therefore in total two, nonreturn valves are provided which likewise connect, in series or parallel in relation to the damper valve(s), the at least one working chamber to the reservoir and the valve actuating member(s) of the damper valve(s) are/is continuously driven by the combination signal of two sensors and thus as a function of the relative and absolute speed (V; $V_{rel}$) for the purpose of generating a desired combined damping force over any desired intermediate positions, characterized in that

a) the one valve actuating member (21, 21') in the case of solely one multipath damping valve (18, 18') or the two valve actuating members in the case of separate damping valves (18a, 18b) releases/release its/their opening cross-section(s) for the rebound and compression travel basically in both directions, but in the opposite direction, therefore asymmetrically (aasymmetrical damping behaviour) for the throughflow directions occurring in each case at a given time;

b) in that the valve actuating members are controlled by sensor signals which simultaneously detect the relative speed ($V_{rel}$) and the absolute speed (V) and produce a combination signal which describes a desired value damping force (Fd = $-B_A \cdot V + B_P \cdot V_{rel}$), $B_A$ being an active damping coefficient and $B_P$ being a passive damping coefficient and

c) in that the damping device generates a damping force Fd corresponding to this formula, the damping force being essentially reduced to zero (Fd = zero) at the points where it would be per se necessary to supply an active damping force (i.e. where Pdiss < 0, Pdiss = Fd $\cdot$ $V_{rel}$).

2. Device according to Claim 1, characterized in that the damping force is essentially reduced to zero if the desired value, derived from the combination of the sensor signals, of the combined damping force (Fd = - $B_A$ $\cdot$ V + $B_P$ $\cdot$ $V_{rel}$) has an algebraic sign (+ or -) which is opposite to the damping forces required by the dynamic motions of the two bodies.

3. Device according to Claim 1 or 2, characterized in that the multipath damper valve (18, 18'; 18a', 18b') is a valve with three connections (23a, 23b; 19), having a cylindrical valve member (21) which is axially displaceable by driving and having a central recess (22) such that the axial displacement of the valve member (21) closes the one throughflow direction to the extent that the other is opened (Figure 9 - first alternative).

4. Device according to one of Claims 1 or 2, characterized in that the damper valve (18') contains a rotary valve member (21') which contains a central recess containing limiting walls running obliquely, such that on turning the valve by means of corresponding sensor signal drive, the one throughflow direction (tension or compression) is increasingly closed to the extent that the other throughflow direction (compression or tension) is opened (Figure 9 - second alternative).

5. Device according to Claim 1 or 2, characterized in that a separate damper valve (18a', 18b') is connected in parallel to each non return valve (16a, 16b) connecting in each case one of the working chambers (12a, 12b) directly to the reservoir (15'), in each case having disc valve members (28) which can be moved into their opening or closing settings electromagnetically either by means of simple switchover or continuously in the opposite direction, a valve part (18a') being responsible for the rebound travel and the other valve part (18b') being responsible for the compression travel (Figure 10).

6. Device according to Claim 5, characterized in that the hydropneumatic reservoir (15, 15') connected to the two working chambers (12a, 12b) via the nonreturn valves (16a, 16b) and the variably asymmetrically controlled damper valves (18a', 18b') is arranged in an annular chamber (26) in the cylinder (Figure 10).

7. Device according to Claim 1 or 2, characterized in that in solely one working chamber (12') of the piston/cylinder assembly, said piston/cylinder assembly is connected via a connecting line (29) which divides up into two branch lines (29', 29'') in each case to nonreturn valves (16a', 16b') in each case connected in an antiparallel manner and further on is connected to the damper valve (18'), the other connection of said damper valve being connected to the hydropneumatic reservoir (15) (Figure 11).

8. Device according to Claim 7, characterized in that the valve member of the damper valve (18') is a rotary valve member.

9. Device according to Claim 1 or 2, characterized in that a valve mechanism comprising the nonreturn valves (36a, 36b; 44a, 44b) and the variably asymmetrical damper valve (18', 18'') is arranged in the piston (32, 32') of the piston/cylinder assembly (Figure 2, Figure 13).

10. Device according to Claim 9, characterized in that the piston (32) receives a variably aasymmetrical damper valve (18') with rotary valve member in a central bore connected to the upper and to the lower working chamber (12a, 12b), in that the rotary valve member can be actuated by the hollow piston rod of a control rod (33), in that the other damper valve connection (37) is connected via nonreturn flap valves (36a, 36b) to the upper and to the lower working chamber (12a, 12b), and in that the hollow piston rod at the same time connects the one damper valve connection (37) to an external hydropneumatic reservoir (15) (Figure 12).

11. Device according to Claim 9, characterized in that, in order to achieve low compression and high flow ratios, the valve member (29) in the piston is constructed to be pot-like and to be rotatable for the purpose of forming throughflow resistance which is asymmetrical to any desired degree, having openings formed from individual throughflow windows (41) in two rows, said openings being aligned towards in each case associated throughflow openings, connected to the upper and to the lower working chamber (12a, 12b), for the pressure means, the openings in the two rows being offset in relation to one another by one interval for the purpose of asymmetrical throughflow variation (Figure 13).

12. Device according to one or more of Claims 1 to 11, characterized in that the semi-active damper formed in this way, having a variably asymmetrical damper valve is part of an air suspension system in which a pressure chamber (55) sealed by a roller bellows (57) connects via a switch-over valve (60) to a piston cylinder device (61) which adjusts the suspension hardness (Figure 14).

**Revendications**

1. Dispositif pour l'amortissement du mouvement de deux corps ou masses se déplaçant l'une par rapport à l'autre et présentant des vitesses variables dans leurs positions absolues, en particulier servant à l'amortissement de systèmes élastiques de suspension de roues dans des véhicules, des véhicules routiers, des autobus, des véhicules ferroviaires et analogues, avec un groupe piston/cylindre dans lequel le cylindre et le piston sont chaque fois reliés à l'un des corps, et des signaux correspondants à des conditions de roulage instantanées, dynamiques, étant captés par des capteurs montés sur les deux corps et utilisés en vue d'une commande du débit traversant d'une soupape d'amortisseur commune à plusieurs voies, ou de deux soupapes d'amortisseur séparées, au moins une chambre de travail du groupe piston/cylindre étant reliée(s) à un accumulateur de fluide sous pression, au moyen de la ou des soupape(s) d'amortisseur, avec une commande de la ou des soupape(s) d'amortisseur, qui rend la force d'amortissement sensiblement nulle (Fd = zéro), lorsque les efforts d'amortissement sont de signes opposés à la force d'amortissement chaque fois souhaitée ou nécessaire du fait de l'évolution du mouvement, dispositif dans lequel :

les capteurs sont réalisés de façon à mesurer la vitesse relative ($V_{rel}$) des deux corps et la vitesse absolue (V) d'au moins l'un des corps ;

de compression, il est chaque fois prévu une soupape anti-retour, donc deux au total, montées en série ou en parallèle par rapport à la ou aux soupapes d'amortisseur qui relient également au moins une chambre de travail à l'accumulateur, et

le ou les organe(s) de réglage de la ou des soupapes d'amortisseur est (sont) commandé(s) par le signal combiné des deux capteurs et donc en fonction de la vitesse relative et absolue (V ; $V_{rel}$), en vue de produire de manière continue une force d'amortissement combinée souhaitée sur des positions intermédiaires quelconques,

caractérisé en ce que :

a) un organe de réglage de soupape (21, 21'), dans le cas où il n'y a qu'une soupape d'amortissement à plusieurs voies (18, 18'), ou les deux organes de réglage de soupape dans le cas de soupapes d'amortissement (18a, 18b) séparées, libère(nt) de manière asymétrique (comportement asymétrique d'amortissement) sa (ses) sections transversales d'ouverture (e) pour le niveau de traction et de compression en principe dans les deux sens, cependant dans des sens opposés, donc les sens d'écoulement survenant à un instant déterminé ;

b) les organes de réglage de soupape sont commandés par des signaux de capteurs qui mesurent simultanément la vitesse relativement ($V_{rel}$) et la vitesse absolue et élaborent un signal combiné qui représente une force d'amortissement de consigne (Fd = $-B_A {}^{\bullet} V + B_P {}^{\bullet} V_{rel}$), où $B_A$ est un coefficient d'amortissement actif et $B_P$ un coefficient d'amortissement passif et,

c) le dispositif d'amortissement produit une force d'amortissement Fd correspondant à cette formule, là où l'amenée d'une force d'amortissement active serait nécessaire en soi (c'est-à-dire Pdiss < 0, Pdiss = $Fd {}^{\bullet} V_{rel}$), la force d'amortissement étant pratiquement réduite à zéro (Fd = zéro).

2. Dispositif selon la revendication 1, caractérisé en ce que la force d'amortissement est ensuite réduite pratiquement à zéro, lorsque la valeur de consigne de la force d'amortissement ($F_d = -B_A {}^{\bullet} + B_P {}^{\bullet} V_{rel}$) qui est dérivée de la combinaison des signaux de capteurs présente un signe algébrique ( + ou -) qui est opposé à celui des forces d'amortissement nécessaires du fait des évolutions dynamiques du mouvement des deux corps.

3. Dispositif selon la revendication 1 ou 2, caractérisé en ce que la soupape d'amortisseur à plusieurs voies (18, 18' ; 18a', 18b') est une soupape à trois raccordements (23a, 23b ; 19), avec un organe de soupape (21) cylindrique, déplaçable axialement au moyen d'une commande, et avec un évidement

15

(22) central, de sorte que le déplacement axial de l'organe de soupape (21) ferme un sens d'écoulement traversant dans la mesure où l'autre est ouvert (figure 9, première variable).

**4.** Dispositif selon l'une des revendications 1 ou 2, caractérisé en ce que la soupape d'amortisseur (18') contient un organe tournant de soupape (21') qui contient un évidement central avec des parois de délimitation obliques, de sorte que dans le cas de rotation de la soupape du fait de la commande correspondante par le signal de capteur, l'un des sens d'écoulement (en traction ou en compression) est de plus en plus fermé, dans la mesure où l'autre sens d'écoulement (compression ou traction) est ouvert (figure 2, deuxième variante).

**5.** Dispositif selon la revendication 1 ou 2, caractérisé en ce qu'une soupape d'amortisseur (18a', 18b') séparée est mise en circuit en parallèle de chaque soupape anti-retour (16a, 16b) reliant respectivement directement l'une des chambre de travail (12a, 12b) à l'accumulateur (15'), comprenant respectivement des organes de soupape à plateau (28) qui peuvent passer électromagnétiquement en sens opposé dans leurs positions d'ouverture et de fermeture, soit par commutation simple soit de façon continue, une partie de soupape (18a') étant responsable de l'étage de traction et l'autre partie de soupape étant responsable de l'étage de compression (figure 10).

**6.** Dispositif selon la revendication 5, caractérisé en ce que l'accumulateur hydropneumatique (15, 15') raccordé avec les deux chambres de travail (12a, 12b) par les soupapes anti-retour (16a, 16b) et les soupapes d'amortisseur (18a', 18'b) commandées de façon variable et asymétrique, est disposé dans une chambre annulaire (26) située dans le cylindre.

**7.** Dispositif selon la revendication 1 ou 2, caractérisé en ce que, dans le cas d'une seule chambre de travail (12') du groupe piston/cylindre, celui-ci est respectivement relié, par l'intermédiaire d'une conduite de liaison (29) se subdivisant en deux conduites de dérivation (29', 29''), à des soupapes anti-retour (16a', 16b'') branchées de manière anti-parallèle et ensuite à la soupape d'amortisseur (18'), dont l'autre raccordement est raccordé à l'accumulateur hydropneumatique (15) (figure 11).

**8.** Dispositif selon la revendication 7, caractérisé en ce que l'organe de soupape de la soupape d'amortisseur (18') est un organe de soupape tournante.

**9.** Dispositif selon la revendication 1 ou 2, caractérisé en ce qu'un mécanisme de soupape comprenant la soupape anti-retour (36a, 36b ; 44a, 44b) et la soupape d'amortisseur (18', 18'') variable asymetrique est disposé dans le piston (32, 32') du groupe piston/cylindre (figure 12, figure 13).

**10.** Dispositif selon la revendication 9, caractérisé en ce que le piston (32) loge une soupape d'amortisseur (18') asymétrique variable avec un organe de soupape tournant, dans un alésage central relié aux chambres de travail supérieure et inférieure (12a, 12b), en ce que l'organe de soupape tournant est susceptible d'être actionné, à travers la tige creuse de piston, par une tige de commande (33), en ce que l'autre raccordement de soupape d'amortisseur (37) est relié par l'intermédiaire de soupape anti-retour (36a, 36b) aux chambres de travail supérieure et inférieure (12a, 12b) et en ce que la tige creuse de piston relie simultanément l'un des raccordements (37) de soupape d'amortisseur à un accumulateur hydropneumatique (15) extérieur (figure 12).

**11.** Dispositif selon la revendication 9, caractérisé en ce que pour obtenir des conditions de pression plus basses et des conditions d'écoulement plus élevées, l'organe soupape (29), est réalisé sous la forme d'un pot dans le piston et susceptible de tourner en vue de créer à volonté une résistance à l'écoulement asymétrique, avec des ouvertures formées par des fenêtres de passage (41) individuelles placées sur deux rangées, qui sont orientées par rapport à des ouvertures de passage du fluide sous pression, respectivement reliées aux chambres de travail supérieure et inférieure (12a, 12b) associées, les ouvertures situées dans les deux rangées étant décalées les unes par rapport aux autres de la valeur d'un pas de progression en vue de créer une variation asymétrique du débit (figure 13).

**12.** Dispositif selon une ou plusieurs des revendications 1 à 11, caractérisé en ce que l'amortisseur semi-actif ainsi formé, avec une soupape d'amortisseur asymétrique variable, fait partie d'un système de suspension pneumatique dans lequel une chambre de pression (55) délimitée par un soufflet roulant (57) est reliée à un dispositif à piston et cylindre (61) réglant la dureté de la suspension, par l'intermédiaire d'une soupape de commutation (6) (figure 14).

Fig.1

Fig.1a

Fig.2

$$F_d = B_p \, V_{rel} - passiv$$

Fig.3

$F_d = -B_A V$ -aktiv

Fig.4

$F_d = B_p V_{rel} - B_A V$

Fig.5

$V_{rel} = \dfrac{B_A}{B_p} \cdot V$

$P_{diss} > 0$

$P_{diss} < 0$

$P_{diss} < 0$

$P_{diss} > 0$

$P_{diss} = F_d \cdot V_{rel}$

Fig. 6

Fig. 7

Fig. 8

# Fig.9

Fig.10

Fig.11

Fig.13

# Fig.12

# Fig.14

EP 0 197 316 B1